# EUROPÄISCHE PATENTANMELDUNG

(11) **EP 4 400 394 A1**
(43) Veröffentlichungstag der Anmeldung: **17.07.2024**
(21) Anmeldenummer: 23212615.1
(22) Anmeldetag: 28.11.2023
(51) Int. Cl.: B62D 33/077

(54) **FAHRZEUG MIT BEWEGLICH GELAGERTEM AUFBAU**

(30) Priorität: 22.12.2022 DE 102022134558
(71) Anmelder: StreetScooter GmbH, 52070 Aachen (DE)
(72) Erfinder: Schüller, Jürgen, 52074 Aachen (DE); Weißgerber, Sascha, 52134 Herzogenrath (DE); Nagle, Anuja, 52062 Aachen (DE); Drebes, Katja, 52070 Aachen (DE)
(74) Vertreter: Michalski Hüttermann & Partner Patentanwälte mbB

(57) **Zusammenfassung**

Die Erfindung betrifft ein Fahrzeug (1) umfassend einen Fahrzeugrahmen (2) und einen auf dem Fahrzeugrahmen (2) angeordneten Aufbau (3), wobei
der Aufbau (3) in einem vorderen Bereich (4) des Fahrzeugrahmens (2) mittels wenigstens eines flexiblen Verbindungselementes (5) mit dem Fahrzeugrahmen (2) verbunden ist, und
das flexible Verbindungselement (5) dazu ausgestaltet ist, eine Bewegung des Aufbaus (3) in vertikaler Richtung vom Fahrzeugrahmen (2) weg zu gewährleisten.

Auf diese Weise wird ein Verbindungselement (5) bereitgestellt, das eine Bewegung des Aufbaus (3) relativ zum Fahrzeugrahmen (2) ermöglicht, um Torsionskräfte auszugleichen.

## Beschreibung

Die Erfindung betrifft ein Fahrzeug umfassend einen Fahrzeugrahmen und einen auf dem Fahrzeugrahmen angeordneten Aufbau.

Fahrzeuge wie insbesondere Lastkraftwagen (LKW) oder Nutzfahrzeuge (NFZ) bestehen in der Regel aus einem Grundgestell bzw. einem Fahrzeugrahmen, auf dem ein Aufbau angeordnet wird. Mit "Aufbau" sind Aufbauten wie beispielsweise eine Pritsche oder ein Koffer gemeint.

Herkömmlicherweise wird der Aufbau mit dem Fahrzeugrahmen fest verschraubt, sodass ein starres System aus Fahrzeugrahmen und Aufbau entsteht. Der Fahrzeugrahmen weist anders als der Aufbau häufig eine gewisse Eigenelastizität auf. Das bedeutet, dass sich der Fahrzeugrahmen bei Unebenheiten leicht mit dehnt bzw. bewegt. Der Aufbau auf dem Fahrzeugrahmen hingegen ist starr und ohne Bewegungsspielraum mit dem Fahrzeugrahmen verbunden.

Steht oder fährt das Fahrzeug über einen unebenen Boden, beispielsweise wenn das Fahrzeug mit einem Reifen auf dem Bordstein parkt, entstehen auf Grund der teilweisen Schiefstellung Torsionskräfte, die auf das Fahrzeuggestell und auf den Aufbau wirken. Die Torsion beschreibt die Verdrehung eines Körpers, die durch die Wirkung eines Torsionsmoments entsteht. Steht das Fahrzeug nun mit einem Reifen auf einem erhöhten Bordstein, entsteht eine Verdrehung des Fahrzeugs um die Längsachse. Die Längsachse des Fahrzeuges bzw. Fahrzeugrahmens und die Längsachse des Aufbaus verschieben sich relativ zueinander. Da jedoch der Aufbau starr mit dem Fahrzeugrahmen ohne Möglichkeit zum Ausgleichen dieser Torsionskräfte verbunden ist, greifen diese Torsionskräfte an den Verbindungspunkten zwischen Aufbau und Fahrzeugrahmen an. Besonders problematisch ist dieser Effekt bei steif ausgelegten Aufbauten, die ebenfalls keine eigene Flexibilität aufweisen. Dies hat zur Folge, dass eine erhebliche Beanspruchung der Verschraubungen des Aufbaus zum Fahrzeugrahmen sowie eine erhebliche Beanspruchung des starren Aufbaus selbst entsteht.

Diese erhebliche Beanspruchung bei Torsionsbewegungen in einem starren System gehen mit einem erhöhten Verschleiß einher. Die Verbindungspunkte bzw. die Verschraubungen sind erhöhten Kräften ausgesetzt, sodass sich die Haltbarkeit der Verbindungspunkte zwischen Fahrzeugrahmen und Aufbau verschlechtert.

Die aus dem Stand der Technik bekannten Vorrichtungen oder Verfahren erlauben es bisher noch nicht, eine Möglichkeit bereitzustellen, den Aufbau derart beweglich auf dem Fahrzeugrahmen anzuordnen, dass Torsionsbewegungen ausgeglichen werden können.

Davon ausgehend ist es die Aufgabe der Erfindung, ein Verbindungselement bereitzustellen, das eine Bewegung des Aufbaus relativ zum Fahrzeuggestell ermöglicht, um Torsionskräfte auszugleichen.

Diese Aufgabe wird durch den Gegenstand des Patentanspruchs 1 gelöst. Bevorzugte Weiterbildungen finden sich in den Unteransprüchen.

Erfindungsgemäß ist somit ein Fahrzeug umfassend einen Fahrzeugrahmen und einen auf dem Fahrzeugrahmen angeordneten Aufbau vorgesehen, wobei der Aufbau in einem vorderen Bereich des Fahrzeugrahmens mittels wenigstens eines flexiblen Verbindungselementes mit dem Fahrzeugrahmen verbunden ist, und das flexible Verbindungselement dazu ausgestaltet ist, eine Bewegung des Aufbaus in vertikaler Richtung vom Fahrzeugrahmen weg zu gewährleisten. Trotz flexibler Anbindung des Aufbaus, die eine Bewegung nach oben ermöglicht, ist dessen stabile Abstützung nach unten zum Fahrzeugrahmen gewährleistet.

Ist vorliegend die Rede von dem "vorderen Bereich", ist damit der Bereich gemeint, der am nächsten zur Fahrzeugspitze bzw. zur Fahrerkabine gelegen ist. Die örtlichen Angaben "vorne", "hinten", "außen" und "innen" beziehen sich insbesondere auf das Fahrzeug, das sich in Fahrtrichtung mit der Fahrzeugfront voran fortbewegt.

Unter "flexibles Verbindungselement" wird vorzugsweise jedes Element verstanden, das geeignet ist, den Fahrzeugrahmen mit dem Aufbau zu verbinden und Bewegungen zwischen dem Fahrzeugrahmen und dem Aufbau durch Verformung des flexiblen Verbindungselementes ausgleichen kann. Als Verformung eines Körpers wird die Änderung der Form des Körpers infolge der Einwirkung einer äußeren Kraft bzw. mechanischen Spannung verstanden. Der Fahrzeugrahmen und der Aufbau sind demnach mit dem flexiblem Verbindungselement derart gekoppelt, dass eine Kräfteübertragung stattfinden kann.

Mittels des flexibel Verbindungselementes ist es möglich, dass der Aufbau sich insbesondere bei Torsionsbewegungen des Fahrzeugrahmens löst und in vertikaler Richtung nach oben von dem Fahrzeugrahmen wegbewegt.

Es ist somit ein maßgeblicher Punkt der Erfindung, dass der mit dem Fahrzeugrahmen verbunden Aufbau in dem verbundenen Zustand vom Fahrzeugrahmen zumindest teilweise entkoppelt werden kann, ohne die Verbindung lösen zu müssen. Es entsteht ein Aufbau, der relativ zum Fahrzeugrahmen beweglich gelagert ist. Dadurch werden die auf die Verbindungspunkte wirkende Kräfte vermindert und die Haltbarkeit der Verbindung zwischen Fahrzeugrahmen und Aufbau gesteigert.

Grundsätzlich bestimmt die Länge des flexiblen Verbindungselements, wie weit der Aufbau angehoben werden kann. Vorzugsweise ist vorgesehen, dass mittels des flexiblen Verbindungselementes ein Anheben des Aufbaus von dem Fahrzeugrahmen bis zu 50 mm, bevorzugt bis zu 25 mm, ganz besonders bevorzugt bis zu 10 mm gewährleistet wird.

Vorzugsweise sind zwei flexible Verbindungselemente paarweise und achsensymmetrisch am Fahrzeug angeordnet. Die Symmetrieachse wird dabei durch die mittlere Längsachse des Fahrzeuges bestimmt.

Gemäß einer bevorzugten Weiterbildung der Erfindung ist der Aufbau in einem hinteren Bereich des Fahrzeugrahmens mittels eines starren Verbindungselementes verbunden. Es hat sich gezeigt, dass bei einer Torsion oder Verschränkung die stärksten Kräfte an den vorderen Anbindungen des Aufbaus entstehen. Mit anderen Worten: Es hat immer eine vordere Ecke des Anbaus den Drang sich vom Fahrzeugrahmen zu lösen und abzuheben. Im vorderen Bereich ist der Aufbau relativ zum Fahrzeugrahmen beweglich gelagert, während im hinteren Bereich der Aufbau weiterhin starr mit dem Fahrzeugrahmen verbunden ist. Es ist demnach zum Beispiel in einem vorhandenen System aus Fahrzeugrahmen und Aufbau möglich, mit nur wenigen und simplen Umbaumaßnahmen das flexible Verbindungselement an den notwendigen Punkten nachträglich einzubauen und somit ein hohes Maß an Beweglichkeit zu gewinnen.

Gemäß einer bevorzugten Weiterbildung der Erfindung umfasst das flexible Verbindungselement ein verformbares Material. Die Flexibilität des Verbindungselementes wird durch die Wahl des Materials bestimmt. Vorzugsweise umfasst das flexibel Verbindungselement ein flexibles Metallblech, das infolge der Einwirkung von äußeren Kräften seine Form ändert. Metalle verformen sich bei geringem Druck elastisch. Das bedeutet, die Metallatome verlassen ihren Platz in der Gitterstruktur und kehren nach Lösung des Druckes an diesen Platz zurück. Das Ausmaß der Verformbarkeit eines Metalls hängt von der Dichte der Gitterstruktur ab.

Gemäß einer bevorzugten Weiterbildung der Erfindung umfasst das flexible Verbindungselement eine Platte. Weiter bevorzugt ist die Platte in einer horizontalen Ebene aufgespannt durch Längs- und Querachse des Fahrzeugs parallel zum Erdboden bzw. zur Fahrbahn angeordnet. Auf Grund der horizontalen Ausrichtung der Platte wird ein Anheben des Aufbaus in vertikaler Richtung ermöglicht. Gemäß einer bevorzugten Weiterbildung der Erfindung ist die Platte senkrecht zur Fahrtrichtung oder längs zur Fahrtrichtung angeordnet.

Gemäß einer bevorzugten Weiterbildung der Erfindung ist das flexible Verbindungselement zwischen dem Fahrzeugrahmen und dem Aufbau angeordnet ist. Dabei ist ein erster zur Außenseite des Fahrzeugrahmens gelegener Teil des Verbindungselementes mit dem Aufbau und ein zweiter zur Innenseite des Fahrzeugrahmens gelegener Teil des Verbindungselementes mit dem Fahrzeugrahmen verbunden.

Das flexible Verbindungselement ist folglich derart angeordnet, dass ein Teil des flexiblen Verbindungselementes mit dem Aufbau verbunden ist und ein dem ersten Teil gegenüberliegender zweite Teil mit dem Fahrzeugrahmen verbunden ist. Dabei ist es wichtig, dass der Teil, der mit dem Aufbau verbunden ist, ausgehend vom Fahrzeugmittelpunkt außen gelagert ist, sodass ein Anheben der äußeren Kante des Aufbaus gewährleistet werden kann. Vorzugsweise ist vorgesehen, dass der am Fahrzeugrahmen verbundene Teil des flexiblen Verbindungselements steif ausgebildet ist, um die Kräfte des Aufbaus inklusive Beladung in den Rahmen einzuleiten und somit stabil abzustützen.

Das ermöglich eine Bewegung bzw. Rotation des Aufbaus um die Längsachse des Fahrzeuges, sodass Verformungen des Fahrzeugrahmens, die durch Unebenheiten auf unterschiedlichen Fahrzeugseiten entstehen, ausgeglichen werden können. Das flexible Verbindungselement ermöglicht eine Bewegung des Aufbaus nach oben, vorzugsweise indem es sich in einer Art S-Schlag elastisch verformen kann oder in einer horizontalen Ebene verdrehen kann.

Als S-Schlag wird vorliegend die Form der Skelettlinie eines Profils verstanden, das vorne positiv gewölbt, aber an der Endfahne wieder leicht hochgebogen ist. Diese Form ähnelt einer Sinuskurve und entsteht, indem das flexible Verbindungselement angehoben und zugleich gestaucht wird.

Gemäß einer bevorzugten Weiterbildung der Erfindung weist der Fahrzeugrahmen wenigstens ein offenes U-Profil auf. Das flexible Verbindungselement ist vorzugsweise auf dem U-Profil befestigt. U-Profile sind Kantteile, die zwei in der Regel rechte Winkel haben. Das flexible Verbindungselement kann demnach besonders einfach zwischen die vorhandenen U-Profile und den Kanten des Aufbaus hinzugefügt und in das System integriert werden.

Gemäß einer bevorzugten Weiterbildung der Erfindung ist der Aufbau in einem mittleren Bereich des Fahrzeugrahmens mittels eines zweiten flexiblen Verbindungselementes verbunden. Der mittlere Bereich ist zwischen dem vorderen und dem hinteren Bereich angeordnet. Damit durch den ermöglichten Freiheitsgrad der Teilentkoppelung in dem angrenzenden Bereich nach hinten keine überhöhten Beanspruchungen entstehen, ist dort wenigstens ein zweites flexibles Verbindungselement angeordnet. Das zweite Verbindungselement ermöglicht ebenfalls eine Bewegung in vertikaler Richtung nach oben vom Fahrzeugrahmen weg. Vorzugsweise ist der Grad der Bewegung jedoch kleiner als der Grad der Bewegung des flexiblen Verbindungselementes im vorderen Bereich. Dadurch entsteht ein Übergang zwischen flexiblen Verbindungselement im vorderen Bereich und starren Verbindungselement im hinteren Bereich, ohne dass zwischen den Bereichen eine erneute Spannung an den Verbindungspunkten entsteht.

Die zweiten flexiblen Verbindungselemente sind dabei insbesondere als Blechlaschen ausgebildet. Ein Blech ist ein Walzwerkserzeugnis aus Metall, das als Tafel ausgeliefert wird und dessen Breite und Länge sehr viel größer als seine Dicke sind. Eine Lasche ist die eine Seite einer Verbindung, bei der zwei Stücke eines flachen Materials verbunden werden.

Gemäß einer bevorzugten Weiterbildung der Erfindung weist der Aufbau mehrere mit dem Fahrzeugrahmen verbindbare Querträger auf. Die Querträger sind dabei insbesondere senkrecht zur Längsachse des Fahrzeuges orientiert und können auf den Fahrzeugrahmen aufgelegt werden. Bevorzugt ist ein vorderer Querträger mittels des flexiblen Verbindungselementes mit dem Fahrzeugrahmen verbunden und/oder ein hinterer Querträger mittels eines starren Verbindungselements mit dem Fahrzeugrahmen verbunden und/oder ein mittlerer Querträger mittels eines zweiten flexiblen Verbindungselementes mit dem Fahrzeugrahmen verbunden. Der Querträger, der am nächsten zur Fahrzeugfront gelegen ist, wird mittels des flexiblen Verbindungsmaterials bewegbar auf dem Fahrzeugrahmen befestigt, während der Querträger, der am weitesten von der Fahrzeugfront weg gelegen ist, wird mittels des starre Verbindungselementes mit dem Fahrzeugrahmen verbunden. Auf diese Weise entsteht ein Gefälle hinsichtlich des Grads der Beweglichkeit. Vorne am Fahrzeug kann sich der Aufbau zumindest teilweise entkoppeln und abheben. Hinten am Fahrzeug ist der Aufbau starr am Fahrzeugrahmen befestigt. Der mittlere Querträger wird über ein zweites flexibles Verbindungselement, insbesondere über eine Blechlasche, mit dem Fahrzeugrahmen verbunden. Diese Blechlasche ist ebenfalls in einer Art S- Schlag elastisch verformbar.

Gemäß einer bevorzugten Weiterbildung der Erfindung ist je ein flexibles Verbindungselement an den äußeren Enden der Querstrebe angeordnet ist. Das flexible Verbindungselement ist folglich beidseitig angeordnet, sodass ein Anheben des Aufbaus sowohl auf beiden Seiten möglich ist.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: schematisch ein Fahrzeug gemäß einem bevorzugten Ausführungsbeispiel der Erfindung in einer perspektivischen Ansicht,
- Fig. 2: schematisch einen vergrößerten Bereich eines gekippten Fahrzeuges gemäß einem bevorzugten Ausführungsbeispiel der Erfindung in einer perspektivischen Ansicht,
- Fig. 3: schematisch einen vergrößerten Bereich eines geraden Fahrzeuges gemäß einem bevorzugten Ausführungsbeispiel der Erfindung in einer perspektivischen Ansicht,
- Fig. 4a-4e: schematisch die Anordnung des flexiblen Verbindungselementes gemäß mehrerer bevorzugter Ausführungsbeispiele der Erfindung in einer Draufsicht.

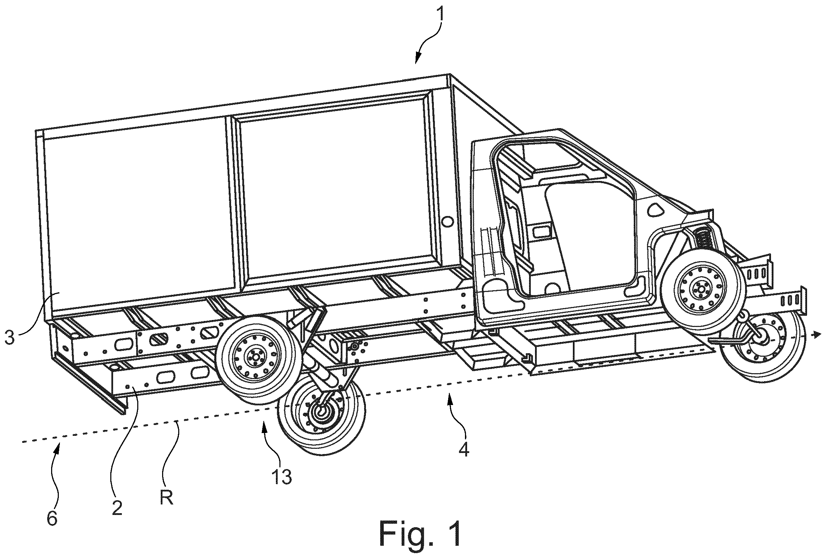

Aus Fig. 1 ist schematisch ein Fahrzeug 1 gemäß einem bevorzugten Ausführungsbeispiel der Erfindung in einer perspektivischen Ansicht ersichtlich. Das Fahrzeug 1 umfasst einen Fahrzeugrahmen 2. Auf dem Fahrzeugrahmen 2 ist ein Aufbau 3 in Form eines Koffers angeordnet. Das Fahrzeug 1 wird in einen vorderen Bereich 4, einen mittleren Bereich 13 sowie einen hinteren Bereich 6 unterteilt. Die örtliche Einteilung "vorne" und "hinten" richten sich nach der Fahrtrichtung R. Der Aufbau 3 weist mehrere Querträger auf, die auf dem Fahrzeugrahmen befestigt sind.

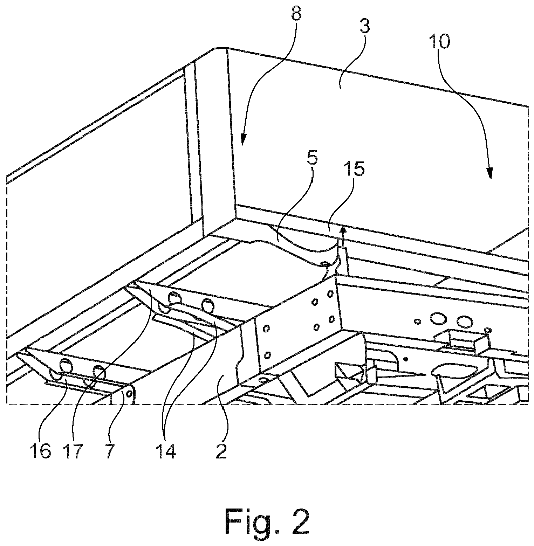

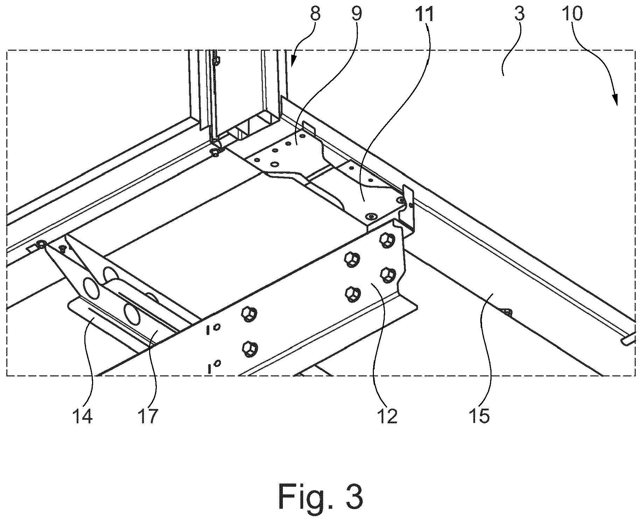

Die Befestigung wird in einer vergrößerten Darstellung des gestrichelten Kastens aus Fig. 1 in Fig. 2 und 3 gezeigt.

Fig. 2 zeigt einen vorderen Querträger 15, einen mittleren Querträger 17 sowie einen hinteren Querträger 16. Der vordere Querträger 15 ist über ein flexibles Verbindungselement 5 in Form eines flexiblen Bleches mit dem Fahrzeugrahmen 2 verbunden. Das flexible Verbindungselement 5 ist dabei an der Außenseite 8 des vorderen Querträgers 15 angeordnet. Der mittlere Querträger 17 ist über ein zweites flexibles Verbindungselement 15 in Form zweier flexibler Blechlaschen mit dem Fahrzeugrahmen 2 verbunden. Der hintere Querträger 16 ist über ein starres Verbindungselement 7 mit dem Fahrzeugrahmen 2 verbunden.

Das Fahrzeug aus Fig. 2 steht mit dem rechten Hinterrad auf einem ca. 160 mm hohen Bordstein. Die vordere rechte Ecke des Aufbaus 3 kann dabei vom Fahrzeugrahmen 2 nach oben abheben. Dadurch wird die Beanspruchung der Verschraubungspunkte herabgesetzt und bleibt schadensfrei. Zugleich ist eine Abstützung in allen anderen Richtungen, insbesondere nach unten weiterhin gewährleistet. Damit durch den ermöglichten Freiheitsgrad der Teilentkoppelung in der nächsten Anbindung nach hinten am nächsten Querträger 17 keine überhöhten Beanspruchungen entstehen, sind an diesem ebenfalls flexible Verbindungselemente 14 in ähnlicher Form ausgebildet, die eine Bewegung nach oben zulassen. Sowohl das erste flexible Verbindungselement 5 als auch das zweite flexible Verbindungselement 14 sind elastisch verformt und zeigen im angehobenen Zustand eine Form nach Art eines S-Schlags.

Der abgesenkte Zustand bei einem eben stehenden Fahrzeug 1 wird in Fig. 3 gezeigt. Die flexiblen Verbindungselemente 5, 14 liegen flach auf den jeweiligen Querträgern 15, 17 an. Das flexible Verbindungselement 5 des vorderen Querträgers 15 umfasst zwei Teile 9, 11. Der erste Teil 9 befindet sich an der Außenseite 8 des Aufbaus 3. Der gegenüberliegende zweite Teil 10 ist näher zur Innenseite 10 gelegen. Der erste Teil 9 ist mit dem Aufbau 3 verbunden, während der zweite Teil 11 mit dem Fahrzeugrahmen 2 verbunden ist. Diese Anordnung ermöglicht das Anheben und leichtes Rotieren des Aufbaus 2 um die Längsrichtung des Fahrzeuges. Der Fahrzeugrahmen 2 umfasst eine Strebe in Form eines offenen U-Profils 12. Auf diesem U-Profil 12 ist der zweite Teil 11 angeordnet. Durch die Anordnung und Orientierung der flexiblen Verbindungselemente 5, 14 wird es gewährleistet, dass der Aufbau 3 in einer Schieflage des Fahrzeuges 1 in vertikaler Richtung nach oben angehoben werden kann, um die Schieflage bzw. entstehende Torsionskräfte auszugleichen.

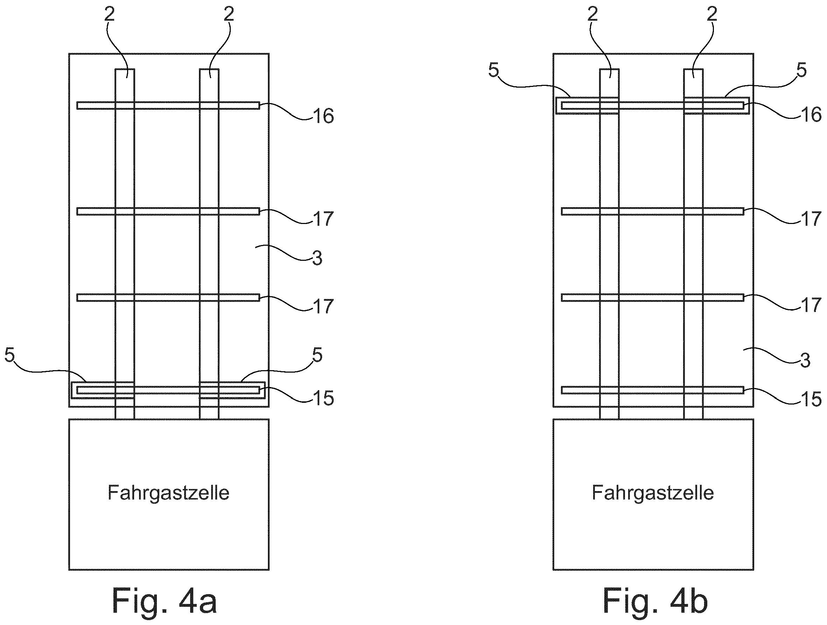

Die Fig. 4a bis 4e zeigen jeweils eine schematische Ansicht des Fahrzeuges 1. Dargestellt ist eine Draufsicht auf einen Querschnitt. Auf dem Rahmen 2 des Fahrzeuges ist ein Aufbau 2 mit mehreren Querstreben 15, 16, 17 angeordnet. Die vordere Querstrebe 15 ist direkt an der Fahrgastzelle des Fahrzeuges 1 angeordnet. Die hinterste Querstrebe 16 liegt auf der gegenüberliegenden Seite am weitesten von der Fahrgastzelle entfernt. Die Querstreben zwischen vordere Querstrebe 15 und hinterer Querstrebe 16 sind die mittleren Querstreben 17. Das flexible Verbindungselement 5 ist jeweils paarweise an einer Querstrebe angeordnet. Dabei ist die Anordnung zur mittleren Längsachse des Fahrzeuges achsensymmetrisch.

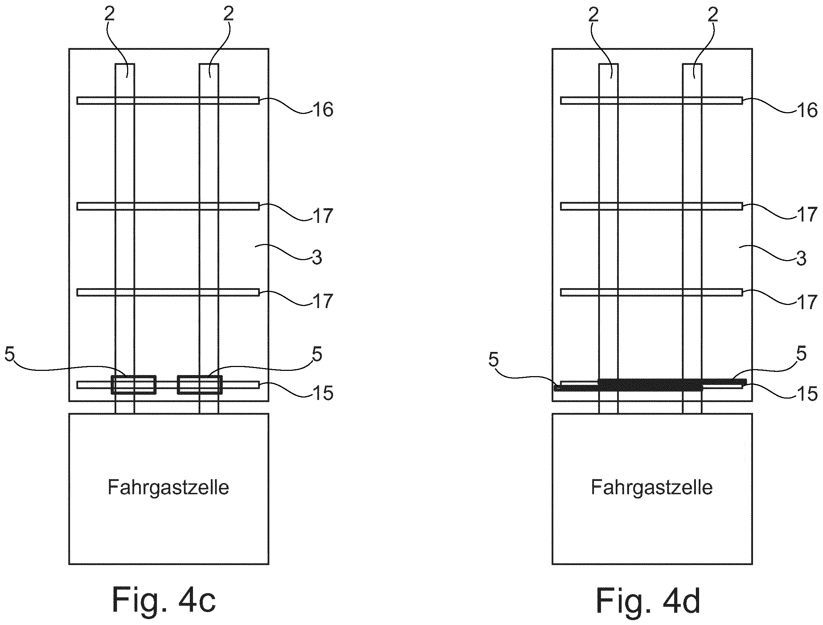

In Fig. 4a sind die flexiblen Verbindungselemente 5 an der vordersten Querstrebe 15 angeordnet. Die flexiblen Verbindungselemente 5 sind quer zur Fahrtrichtung und von den Querstreben 15 aus nach außen also zur Außenseite des Fahrzeuges 1 gerichtet angeordnet. In Fig. 4b sind die flexiblen Verbindungselemente 5 auf dieselbe Weise angeordnet, jedoch sind die flexiblen Verbindungselemente 5 mit der hintersten Querstrebe 16 verbunden. Die flexiblen Verbindungselemente 5 können ebenso nach innen also zur Innenseite des Fahrzeugs 1 gerichtet angeordnet sein. Diese nach innen gerichtete Anordnung ist in Fig. 4c gezeigt.

In Fig. 4d sind die flexiblen Verbindungselemente 5 ebenfalls nach innen gerichtet angeordnet. Die Länge der flexiblen Verbindungselemente 5 ist jedoch größer als der Abstand der Träger des Rahmens, sodass ein flexibles Verbindungselement 5 über den benachbarten Träger hinausragt und vorzugsweise an der gegenüberliegenden Außenseite des Aufbaus 2 mit dem Aufbau 2 verbunden ist.

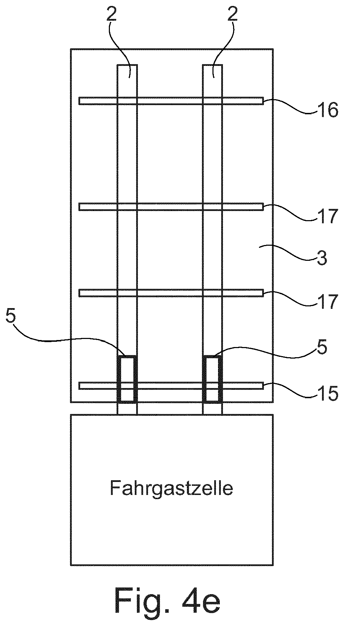

Alternativ können die flexiblen Verbindungselemente 5 in oder entgegen der Fahrtrichtung ausgerichtet sein. Diese Anordnung ist in Fig. 4e gezeigt. Je nachdem ob die flexiblen Verbindungselemente 5 in oder entgegen der Fahrtrichtung angeordnet sind, ermöglichen sie ein Öffnen bzw. Anheben des Aufbaus 2 nach vorne oder nach hinten hin.

Darüber hinaus sind ebenfalls beliebige Zwischenpositionen zwischen den in Fig. 4a bis Fig. 4e gezeigten Positionen von der Erfindung umfasst.

### Bezugszeichenliste

- 1: Fahrzeug
- 2: Fahrzeugrahmen
- 3: Aufbau
- 4: vorderer Bereich
- 5: flexibles Verbindungselement
- 6: hinterer Bereich
- 7: starres Verbindungselement
- 8: Außenseite
- 9: erster Teil
- 10: Innenseite
- 11: zweiter Teil
- 12: U-Profil
- 13: mittlerer Bereich
- 14: zweites flexibles Verbindungselement
- 15: vorderer Querträger
- 16: hinterer Querträger
- 17: mittlerer Querträger
- R: Fahrtrichtung

## Patentansprüche

1. Fahrzeug (1) umfassend einen Fahrzeugrahmen (2) und einen auf dem Fahrzeugrahmen (2) angeordneten Aufbau (3), wobei
der Aufbau (3) in einem vorderen Bereich (4) des Fahrzeugrahmens (2) mittels wenigstens eines flexiblen Verbindungselementes (5) mit dem Fahrzeugrahmen (2) verbunden ist, und
das flexible Verbindungselement (5) dazu ausgestaltet ist, eine Bewegung des Aufbaus (3) in vertikaler Richtung vom Fahrzeugrahmen (2) weg zu gewährleisten.

2. Fahrzeug (1) nach Anspruch 1, wobei der Aufbau (3) in einem hinteren Bereich (6) des Fahrzeugrahmens (2) mittels eines starren Verbindungselementes (7) verbunden ist.

3. Fahrzeug (1) nach Anspruch 1 oder 2, wobei das flexible Verbindungselement (5) ein verformbares Material umfasst.

4. Fahrzeug (1) nach einem der vorherigen Ansprüche, wobei das flexible Verbindungselement (5) eine Platte umfasst und die Platte in einer horizontalen Ebene angeordnet ist.

5. Fahrzeug nach (1) nach Anspruch 4, wobei die Längsrichtung der Platte senkrecht zur Fahrtrichtung (R) oder längs zur Fahrtrichtung (R) orientiert ist.

6. Fahrzeug (1) nach einem der vorherigen Ansprüche, wobei das flexible Verbindungselement (5) zwischen dem Fahrzeugrahmen (2) und dem Aufbau (3) angeordnet ist, ein erster zur Außenseite (8) des Fahrzeugrahmens (2) gelegener Teil (9) des flexiblen Verbindungselementes (5) mit dem Aufbau (3) und ein zweiter zur Innenseite (10) des Fahrzeugrahmens (2) gelegener Teil (11) des flexiblen Verbindungselementes (5) mit dem Fahrzeugrahmen (2) verbunden ist.

7. Fahrzeug (1) nach einem der vorherigen Ansprüche, wobei der Fahrzeugrahmen (2) wenigstens ein U-Profil (12) aufweist und das flexible Verbindungselement (5) auf dem U-Profil (12) befestigt ist.

8. Fahrzeug (1) nach einem der vorherigen Ansprüche, wobei der Aufbau (3) in einem mittleren Bereich (13) des Fahrzeugrahmens (2) mittels eines zweiten flexiblen Verbindungselementes (14) verbunden ist.

9. Fahrzeug (1) nach einem der vorherigen Ansprüche, wobei der Aufbau (3) mehrere mit dem Fahrzeugrahmen (2) verbindbare Querträger (15, 16, 17) aufweist, ein vorderer Querträger (15) mittels des flexiblen Verbindungselementes (5) mit dem Fahrzeugrahmen (2) verbunden ist und/oder ein hinterer Querträger (16) mittels eines starren Verbindungselements (7) mit dem Fahrzeugrahmen (2) verbunden ist und/oder ein mittlerer Querträger (17) mittels eines zweiten flexiblen Verbindungselementes (14) mit dem Fahrzeugrahmen (2) verbunden ist.

10. Fahrzeug (1) nach einem der vorherigen Ansprüche, wobei je ein flexibles Verbindungselement (5) an den äußeren Enden der jeweiligen Querstrebe (15, 17) angeordnet ist.
